(19) Europäisches Patentamt
European Patent Office
Office européen des brevets

(11) Veröffentlichungsnummer: **0 092 700**
**B1**

(12) **EUROPÄISCHE PATENTSCHRIFT**

(45) Veröffentlichungstag der Patentschrift: **16.07.86**

(51) Int. Cl.⁴: **C 08 G 18/61**, C 08 G 18/14, C 08 K 5/54, C 08 G 77/04

(21) Anmeldenummer: **83103339.4**

(22) Anmeldetag: **06.04.83**

(54) **Verfahren zur Herstellung hochelastischer kalthärtender Polyurethanschaumstoffe.**

(30) Priorität: **23.04.82 DE 3215317**

(43) Veröffentlichungstag der Anmeldung:
**02.11.83 Patentblatt 83/44**

(45) Bekanntmachung des Hinweises auf die Patenterteilung:
**16.07.86 Patentblatt 86/29**

(84) Benannte Vertragsstaaten:
**BE DE FR GB IT NL**

(56) Entgegenhaltungen:
**EP - A - 0 035 080**
**DE - B - 2 402 690**
**US - A - 3 966 650**
**US - A - 4 014 825**
**US - A - 4 031 044**

(73) Patentinhaber: **Th. Goldschmidt AG,
Goldschmidtstrasse 100 Postfach 101461,
D-4300 Essen 1 (DE)**

(72) Erfinder: **Kollmeier, Hans-Joachim, Dr.,
Barkhorstrücken 27, D-4300 Essen (DE)**
Erfinder: **Klietsch, Bernd-Jürgen,
Schweidnitzerstrasse 15, D-4660 Gelsenkirchen-Buer (DE)**
Erfinder: **Lammerting, Helmut, Schweerstrasse 13,
D-5812 Herbede (DE)**
Erfinder: **Langenhagen, Rolf-Dieter, Kampstrasse 5,
D-4321 Hattingen-Niederwenigern (DE)**

EP 0 092 700 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung hochelastischer kalthärtender Polyurethanschaumstoffe aus mindestens difunktionellen Polyisocyanaten, Polyolen mit mindestens zwei Hydroxylgruppen je Molekül, wovon im Mittel mindestens 40% hiervon primäre Hydroxlgruppen sind und das Äquivalentgewicht je Hydroxylgruppe 700 bis 3000 beträgt, Katalysatoren, Treibmitteln und Stabilisatoren sowie gegebenenfalls anderen üblichen Zusatzmitteln.

Bei der Herstellung von sogenannten hochelastischen Polyurethankaltschaum lässt man ein mindestens difunktionelles Polyisocyanat, z.B. Toluoldiisocyanat oder Diphenylmethandiisocyanat, mit einem Polyol reagieren, welches mindestens zwei Hydroxylgruppen je Molekül aufweist und das im Mittel einen hohen Anteil an primären Hydroxylgruppen hat. Derartige Polyole werden in der Regel dadurch hergestellt, dass man zunächst Propylenoxid an einen Startalkohol anlagert und hieran Ethylenoxid in solchen Mengen anlagert, dass mindestens 40% der Hydroxylgruppen, vorzugsweise 70 bis 90% der Hydroxylgruppen, in Form primärer Hydroxylgruppen vorliegen.

Bedingt durch den hohen Gehalt an primären OH-Gruppen weisen die Polyole in bezug auf die Isocyanate eine hohe Reaktivität auf. Im Gegensatz zu konventionellen Polyurethanschäumen, sogenannten Heissschäumen, wird deshalb bereits beim Aufschäumen eine hohe Vernetzungsdichte erzielt. Dies hat den Vorteil, dass beim Aushärten auf die Zufuhr von äusserer Energie verzichtet werden kann und dass die Zeit für die Aushärtung der Schäume insgesamt verkürzt wird. Nachteilig ist aber, dass die Tendenz zur Bildung geschlossenzelliger Schäume erhöht und der Verarbeitungsspielraum eingeengt wird. Unter Verarbeitungsspielaum sind dabei die Toleranzgrenzen zu verstehen, innerhalb derer von einer Rezeptur abgewichen werden kann, ohne dass die Ausbildung stabiler und gleichzeitig offenzelliger Schäume gefährdet wird.

Der durch die hohe Reaktivität der Verschäumungskomponenten bedingte engere Verarbeitungsspielraum und damit der enge Bereich der Ausbildung eines zwar stabilen, aber doch offenzelligen Schaumes gestattet es nicht, als Schaumstabilisatoren diejenigen Produkte zu verwenden, die bei der Herstellung von sogenannten Heissschäumen mit Erfolg eingesetzt werden.

Infolge der hohen Reaktivität der Verschäumungsrohstoffe ist es bei der Herstellung von hochelastischen kalthärtenden Polyurethanschäumen durch Anwendung höherfunktioneller Isocyanate oder Polyether und unter Mitverwendung von niedermolekularen polyfunktionellen Vernetzerverbindungen im Prinzip möglich, auch ohne Zusatz von Schaumstabilisatoren stabile Schaumkörper zu erhalten. Die auf diesem Wege erhaltenen Schaumstoffe weisen jedoch eine unregelmässige Zellstruktur auf und sind zudem im wesentlichen geschlossenzellig und daher technisch nicht brauchbar.

Zur Regulierung der Zellstruktur dieser Schaumstoffe können niedermolekulare Methyl- oder Phenylmethylpolysiloxane eingesetzt werden, wie sie z.B. in der DE-PS 25 33 074 und der DE-OS 22 21 811 beschrieben sind. Es werden dadurch in einem engen Bereich ausreichend offenzellige Schäume mit regulierter Zellstruktur erhalten, jedoch ist der Verarbeitungsspielraum eng, und was noch wesentlicher ist, für viele Anwendungen sind die physikalischen Eigenschaften dieser Schaumstoffe nicht ausreichend. Infolge ihres hohen Vernetzungsgrades haben diese Schaumstoffe niedrige Werte für die Bruchdehnung und Reissfestigkeit und ausserdem eine relativ geringe Härte.

Um diese Nachteile zu beseitigen, sind hochelastische Schaumstoffe entwickelt worden, die neben den reaktiven Polyolen mit überwiegend difunktionellen Isocyanaten, wie reinem Toluoldiisocyanat oder Mischungen von TDI mit 20% oder weniger Diphenylmethandiisocyanat und geringen Anteilen an Vernetzerverbindungen als Rohstoffen, hergestellt werden. Um die Härte dieser Schaumstoffe zu verbessern, können neben den aus Propylen- und Ethylenoxid bestehenden Polyolen weiterhin solche Polyole eingesetzt werden, die zusätzlich chemisch gebunden oder physikalisch eindispergiert polymere Bestandteile enthalten, wie z.B. Polymerisate des Acrylnitrils und Styrol oder polymere Harnstoffderivate.

Formulierungen auf dieser Basis ergeben keine eigenstabilen Schäume, d.h. ohne Zusatz von Stabilisatoren fallen die Schaumstoffe nach dem Aufsteigen in sich zusammen. Die für diese Schaumstoffe erforderlichen Stabilisatoren müssen demnach gegen Rückfall stabilisierend und zellregulierend wirken und in einem möglichst weiten Bereich die Bildung von offenzelligen Schäumen gewährleisten.

Zur Erzielung dieser Anforderungen sind bereits Verbindungen vorgeschlagen worden. Dabei kann man unter den Stabilisatoren des Standes der Technik zwei Gruppen unterscheiden:

Die eine Gruppe wird von Polysiloxan-Polyoxyalkylen-Copolymerisaten gebildet, wobei der Polysiloxanblock ein Molekulargewicht von etwa 150 bis 2500 und der Polyoxyalkylenblock ein Molekulargewicht von etwa 150 bis 500 hat. Die Produkte sind frei von Hydroxylgruppen. Derartige Produkte und ihre Verwendung bei der Polyurethanverschäumung sind in der US-PS 3 741 917 und der US-PS 4 031 044 beschrieben.

Die andere Gruppe von Stabilisatoren umfasst Polysiloxane, welche mit organischen Gruppen modifiziert sind. Derartige Gruppen sind die Cyanoalkylgruppe (US-PS 3 952 038), die Cyanoalkoxyalkylgruppe (DE-AS 2 402 690), die Sulfolanyloxyalkylgruppe (US-PS 4 110 272), die Morpholinoalkoxyalkylgruppe (US-PS 4 067 828) und die tert. Hydroxyalkylgruppe (US-PS 4 039 490).

Ein Nachteil der vorgenannten und im Prinzip brauchbaren Stabilisatoren ist in ihrem verhältnismässig engen Verarbeitungsspielraum zu sehen. Dies zwingt den Verarbeiter zur Einhaltung sehr enger Toleranzen bei der Dosierung der Verschäumungskomponenten, die nicht immer mit der erforderlichen Sicherheit eingehalten werden können. Neben den prinzipiellen Anforderungen an einen Stabilisator, d.h. Stabilisierung gegen Rückfall, Zellregulierung und Zellöffnung nach dem Aufsteigen, kommt dem Stabilisator hauptsächlich die Aufgabe zu, für die in der Praxis auftretenden Veränderungen eine ausgleichende Funktion auszuüben. Bei unterschiedlicher Reaktivität und Stabilität einer Schaumformulierung muss es möglich sein, durch Konzentrationsänderung des Stabilisators das gewünschte Niveau einzustellen. Aus diesem Grunde ist für die Praxis das Verarbeitungsspiel eines Stabilisators in bezug auf Konzentrationsveränderungen besonders wichtig. Ein guter Stabilisator muss sowohl in niedrigeren wie in höheren Anwendungskonzentrationen neben der Schaumstabilisierung vergleichbare Offenzelligkeit und Zellstrukturen ergeben.

Der vorliegenden Erfindung liegt die Aufgabe zugrunde, für den vorgenannten Einsatzzweck bei der Herstellung von hochelastischen kalthärtenden Polyurethanschäumen Stabilisatoren zu finden, welche verbesserte stabilisierende Eigenschaften haben und bei verhältnismässig breitem Verarbeitungsspielraum gleichzeitig offenzellige Schaumstoffe liefern. Diese Eigenschaftskombination war bei Produkten des Standes der Technik nicht zu finden.

Diese Aufgabe wird erfindungsgemäss dadurch gelöst, dass man als Stabilisatoren Organopolysiloxane mit im Mittel mindestens einer end- oder seitenständig gebundenen Gruppe Z der Formel

$$-(CH_2)_3-O-CH_2-\underset{\displaystyle OH}{\underset{|}{C}}H-CH_2X$$

oder

$$-(CH_2)_3-O-CH_2-\underset{\displaystyle X}{\underset{|}{C}}H-CH_2OH$$

wobei X ein $-OR^1-$, $-NR^2_2-$, $-SR^1-$, Halogen- oder Pseudohalogenrest,

$R^1$ ein Alkylrest mit 1 bis 4 Kohlenstoffatomen, ein Wasserstoffrest oder ein Arylrest,

$R^2$ ein Alkylrest mit 1 bis 4 Kohlenstoffatomen ist, und wobei die Hydroxylgruppe in der Gruppe Z überwiegend sekundär gebunden ist, verwendet.

Die Gruppe X kann somit z.B. eine $-OCH_3-$, $-OC_2H_5-$, $-OC_4H_9-$, $-OC_6H_5-$ oder eine $-OH$-Gruppe sein. Bevorzugt sind hierbei die Gruppen $-OCH_3$, $-OC_2H_5$ und $-OH$. Die Gruppe X kann ferner eine $N(CH_3)_2-$, $N(C_2H_5)_2-$, $N(C_3H_7)_2-$, $N(C_4H_9)_2$-Gruppe sein, wobei die Gruppe $N(CH_3)_2$ bevorzugt ist. Die Gruppe X kann ferner die Gruppe $SCH_3$, $SC_2H_5$, $SC_3H_7$, $SC_4H_9$ oder SH sein. Eine weitere Bedeutung der Gruppe X ist die eines Halogen- oder Pseudohalogenrestes, insbesondere eines Chlor-, Brom-, Cyanid- oder Rhodanidrestes. Besonders bevorzugt ist der Chlor- und Cyanidrest.

Die Gruppen Z können sowohl end- als auch seitenständig an das Organopolysiloxan gebunden sein. Das Organopolysiloxan ist vorzugsweise ein lineares Organopolysiloxan, wobei insbesondere lineare Methylpolysiloxane bevorzugt sind.

Entsprechend einer besonders bevorzugten Ausführungsform des erfindungsgemässen Verfahrens verwendet man Organopolysiloxane der allgemeinen Formel

$$Y(CH_3)_2SiO\,[Si(CH_3)_2O]_a\,[SiCH_3YO]_b\,Si(CH_3)_2Y$$

wobei Y ein Methylrest oder die Gruppe Z ist, aber mindestens ein Rest Y die Bedeutung von Z hat und a = 1 bis 25, b = 0 bis 10 ist. Vorzugsweise ist a = 2 bis 12 und b = 1 bis 5.

Besonders bevorzugt sind die Organipolysiloxane, bei denen die Gruppen Y, die die Bedeutung von Z haben, seitenständig gebunden sind und a = 2 bis 12, b = 1 bis 5 ist.

Die Herstellung dieser Verbindungen kann dadurch erfolgen, dass man an das entsprechende Organopolysiloxan, welches end- und/oder seitenständig mindestens eine Glycidoxypropylgruppe aufweist und deren Herstellung z.B. in der US-PS 3 431 143 beschrieben ist, die Verbindung XH an den Oxiranring unter Ringöffnung anlagert, wobei X die bereits angegebene Bedeutung hat. Dabei entstehen je nach Art der Katalyse vorwiegend Verbindungen mit primären oder sekundären Hydroxylgruppen. Bei basischer Katalyse werden vorwiegend sekundäre Hydroxylgruppen gebildet. Basische Katalysatoren sind z.B. Alkalialkoholate oder tertiäre Amine.

Alternativ können die gewünschten Verbindungen auch in der Weise hergestellt werden, dass zunächst Allylglycidether mit Verbindungen des Typs HX umgesetzt wird und die gebildeten Allylether der Formel

$$CH_2=CH-CH_2-O-CH_2-\underset{\displaystyle OH}{\underset{|}{C}}H-CH_2X$$

oder

$$CH_2=CH-CH_2-O-CH_2-\underset{\displaystyle X}{\underset{|}{C}}H-CH_2OH$$

nachfolgend in an sich bekannter Weise an Organopolysiloxane mit end- oder seitenständigen SiH-Gruppen angelagert werden. Unter den hierfür zur Anwendung gelangenden Pt-Katalysatoren sind selektiv wirkende Verbindungen, welche die Nebenreaktion von C–OH mit SiH-Gruppen niedrighalten, wie z.B. cis-$[Pt(NH_3)_2Cl_2]$, bevorzugt.

Unabhängig nach welchem Verfahren die erfindungsgemässen Organopolysiloxane hergestellt

werden, sind solche Verbindungen, die sekundäre Hydroxylgruppen aufweisen, für das erfindungsgemässe Verfahren bevorzugt.

Es war für den Fachmann nicht vorherzusehen, dass die beim erfindungsgemässen Verfahren zu verwendenden Organopolysiloxane die gewünschte Eigenschaftskombination aufweisen. Der Fachmann musste vielmehr befürchten, dass die beim erfindungsgemässen Verfahren zu verwendenden Verbindungen aufgrund ihrer primären oder sekundären Hydroxylgruppen in Konkurrenz zu den Polyolen mit den Isocyanaten reagieren und damit ihre stabilisierende Wirkung verlieren würden. Dieses überraschende Verhalten wird auch nicht aus dem Stand der Technik nahegelegt, demzufolge Verbindungen mit tertiären Hydroxylgruppen diese Konkurrenzreaktion ebenfalls nicht zeigen. Verbindungen mit tertiären Hydroxylgruppen sind durch ihre sterische Hinderung und ihre geringe Baiszität zur Reaktion mit Isocyanaten nicht oder nur kaum befähigt. Diese Verbindungen des Standes der Technik zeigen aber auch nicht die verbesserten stabilisierenden Eigenschaften der beim erfindungsgemässen Verfahren zu verwendenden Stabilisatoren.

Die nach dem erfindungsgemässen Verfahren zu verwendenden Organopolysiloxane können gegebenenfalls zur weiteren Verbesserung der Zellregulierung und der Offenzelligkeit der hochelastischen Schaumstoffe mit Alkyl- oder Alkyl-/Arylpolysiloxanen von relativ kurzer Kettenlänge kombiniert werden. Bevorzugte Polysiloxane dieses Typs sind solche, die definierte Kettenlängen mit 4 bis 12 Siliciumatomen aufweisen und wie sie z.B. in der DE-PS 25 33 074 beschrieben sind.

Beim erfindungsgemässen Verfahren kann man die Reaktionskomponenten bzw. Zusätze verwenden, die für die Herstellung von hochelastischen Polyurethanschäumen bekannt und üblich sind.

Als mindestens difunktionelle Polyisocyanate sind z.B. die Isomeren des Toluoldiisocyanates, die Isomeren des Diisocyanatodiphenylmethans oder oligomere Polyphenylmethylenisocyanate einsetzbar.

Die Polyole weisen mindestens 2, insbesondere 2 bis 8, Hydroxylgruppen je Molekül auf, wovon im Mittel mindestens 40%, vorzugsweise 70 bis 90%, hiervon primäre Hydroxylgruppen sind. Der auf jede Hydroxylgruppe entfallende Molekulargewichtsanteil (Äquivalentgewicht) beträgt 700 bis 3000. Die Polyole können ausschliesslich aus Oxyethylen- und Oxypropyleneinheiten aufgebaut sein. Bis zu 30 Gew.-% anderer polymerer Bestandteile können chemisch in den Polyolen gebunden oder physikalisch in diesen dispergiert sein. Derartige andere polymere Bestandteile sind z.B. Polymerisate des Styrols oder Acrylnitrils oder Copolymerisate hiervon sowie z.B. polymere organische Harnstoffderivate.

Als Katalysatoren werden die üblichen Katalysatoren, wie z.B. organische Salze von Zinn und tertiäre Amine, eingesetzt.

Geeignete Treibmittel sind neben Wasser die an sich für diesen Zweck bekannten Fluorchlorkohlenwasserstoffe. Weitere Zusatzmittel sind Flammschutzmittel, wie z.B. Chloralkylphosphorsäureester sowie inerte Füllstoffe und Farbpigmente.

In den folgenden Beispielen werden die überlegenen Eigenschaften der beim erfindungsgemässen Verfahren verwendeten Stabilisatoren in üblichen Schaumrezepturen des Standes der Technik gezeigt.

Die Herstellung der beim erfindungsgemässen Verfahren zu verwendenden Organopolysiloxane erfolgt nach den im Prinzip bekannten, zuvor beschriebenen Methoden. Beispielhaft für die bevorzugte Verfahrensweise – Anlagerungen von Umsetzungsprodukten des Allylglycidethers an SiH-Gruppen enthaltende Organopolysiloxane – sind die folgenden Ausführungsbeispiele.

Beispiel 1

In einem Kolben, der mit Tropftrichter, Rührer, Thermometer, Gaseinleitung und Rückflusskühler versehen war, wurden 90 g (20% Überschuss) Allyl-2-hydroxy -3- methoxypropyl-ether und 3 mg cis-$[PtCl_2(NH_3)_2]$ vorgelegt. Durch die Apparatur wurde Stickstoff geleitet. Bei einer Temperatur von 100 bis 105 °C wurden 110 g eines Siloxans mit der durchschnittlichen Formel $(CH_3)_3SiO[(CH_3)_2SiO]_{2,8}[(CH_3)HSiO]_{2,4}Si(CH_3)_3$ in 20 Min. eingetropft. Anschliessend liess man den Versuch noch 2 Std. nachreagieren. Danach wurde der Ansatz bei 80 °C mit 1 g Bentonit versetzt, 1 Std. gerührt und anschliessend filtriert. Man erhielt eine klare, farblose Flüssigkeit. Der SiH-Umsatz betrug 96,8% (bestimmt über in alkalischem Medium mit n-Butanol abspaltbaren Wasserstoff). Das Produkt hatte eine Viskosität bie 20 °C von 51 mPas.

Beispiel 2

In einer Apparatur wie bei Beispiel 1 wurden 100 g (22% Überschuss) Allyl-2-hydroxy -3-methoxypropyl-ether und 4 mg cis-$[PtCl_2(NH_3)_2]$ unter Stickstoff vorgelegt und auf 110 °C erhitzt. Nun wurden 127 g eines Siloxans mit der durchschnittlichen Formel $H(CH_3)_2SiO[(CH_3)_2SiO]_{4,3}Si(CH_3)_2H$ in 25 Min. eingetropft. Man liess noch 2 1/2 Std. nachreagieren. Nach Abkühlung auf 60 °C wurde der Ansatz mit 1,5 g Bentonit versetzt, 1 Std. gerührt und filtriert. Es fiel eine klare, farblose Flüssigkeit an. Die Analyse ergab einen SiH-Umsatz von 97,2%. Die Viskosität bei 20 °C lag bei 32 mPas.

Beispiele 3 bis 8

Entsprechend den Bedingungen von Beispiel 1 wurden weitere Umsetzungen von Siloxanen der Formel $(CH_3)_3SiO[(CH_3)_2SiO]_a[(CH_3)HSiO]_b$-9Si$(CH_3)_3$ mit Verbindungen des Typs $CH_2{=}CH{-}CH_2{-}O{-}CH_2{-}CH(OH){-}CH_2X$ in Gegenwart von cis-$[PtCl_2(NH_3)_2]$ durchgeführt.

| Beispiel | eingesetztes Siloxan a | b | eingesetzte Allylverbindung | SiH-Umsatz % | Viskosität 20 °C mPas |
|---|---|---|---|---|---|
| 3 | 4 | 3 | $CH_2{=}CH{-}CH_2{-}O{-}CH_2{-}CH(OH){-}CH_2{-}O{-}CH_3$ | 95,9 | 78,5 |
| 4 | 2,8 | 2,4 | $CH_2{=}CH{-}CH_O{-}CH_2{-}CH(OH){-}CH_2CN$ | 94,8 | 130 |
| 5 | 4,3 | 2,2 | $CH_2{=}CH{-}CH_2{-}O{-}CH_2{-}CH(OH){-}CH_2{-}O{-}C_6H_5$ | 97,9 | 202 |
| 6 | 4,3 | 2,2 | $CH_2{=}CH{-}CH_2{-}O{-}CH_2{-}CH(OH){-}CH_2OH$ | 96,8 | 801 |
| 7 | 4,3 | 2,2 | $CH2{=}CH{-}CH_2{-}O{-}CH_2{-}CH(OH){-}CH_2{-}N(CH_3)_2$ | 94,3 | 25 |
| 8 | 2,5 | 4,5 | $CH_2{=}CH{-}CH_2{-}O{-}CH_2{-}CH(OH){-}CH_2{-}O{-}CH_3$ | 95,2 | 140 |

Zum Vergleich der erfindungsgemässen Organopolysiloxane mit einem Stabilisator des Standes der Technik wurde folgende Verbindung

$$(CH_3)_3SiO[(CH_3)_2SiO]_a[CH_3\underset{\displaystyle |\atop \displaystyle (CH_2)_3{-}O{-}CH_2{-}CH_2{-}CN}{Si}O]_b{-}Si(CH_3)_3$$

mit a = 3,3, b = 2,0 und a = 3,9, b = 2,9 nach DE-AS 24 02 690, Beispiel 12 und Beispiel 5, hergestellt.

Die Herstellung und Bewertung der Schaumstoffe unter Anwendung der erfindungsgemässen Organopolysiloxane erfolgte in Formulierungen für Form- und Blockschäume auf folgende Weise.

Durchführung der Verschäumungsversuche

Formschäume

In einem 2 l-Becher wurden die in der Formulierung 1 bzw. Formulierung 2 aufgeführten Komponenten, ausser dem Isocyanat, eingewogen und durch einen Propellerrührer 60 Sek. bei 500 U/Min. vermischt. Danach wurden die entsprechenden Isocyanatmengen zugegeben, und das Gemisch wurde für weitere 7 Sek. bei 2000 U/Min. gerührt. Das Reaktionsgemisch wurde dann in eine auf 50 °C vorbeheizte und mit einem Trennmittel vorbehandelte Aluminiumform mit den Massen 40 cm ×40 cm ×10 cm gegeben. Die Formenstandzeit für beide Formulierungen betrug 8 Min.

Bewertung der Formschäume

Zur Bestimmung der Aufdrückkraft wurde das Schaumteil behutsam der Form entnommen. Unmittelbar darauf wurde am nicht angedrückten Schaumteil die Eindruckhärte bei 50% Stauchung gemessen. Der hierzu verwendete Rundstempel hatte die Fläche von 300 $cm^2$. Nach Entlastung wurden die im Schaumteil vorhandenen geschlossenen Zellen durch ausgiebiges Walken vollständig geöffnet. Danach wurde nochmals die Eindruckhärte bei 50% Stauchung gemessen. Die Differenz der beiden Messwerte wurde als Mass für die Aufdrückkraft genommen.

Ausserdem wurde die Zahl der Zellen pro cm sowie die Gleichmässigkeit der Zellstruktur bewertet.

Blockschäume

Versuchsdurchführung:

Die Versuche wurden auf einer 2-Komponenten-Admiral-Niederdruckmaschine durchgeführt. Der Polyolausstoss betrug 10 kg/Min. Der Schäumprozess erfolgte in einer oben offenen Box mit den Massen 100 cm ×60 cm ×60 cm.

Bewertung der Blockschäume

Zur Bewertung des Einflusses von verschiedenen Stabilisatoren bei unterschiedlichen Konzentrationen wurde in den Blockschäumen das Abblasen qualitativ beurteilt; die Aufdrückkraft, die Porosität der Schaumstoffe und ihre Elastizität wurden nach dem Aufdrücken gemessen. Zusätzlich wurde auch bei den Blockschäumen die Zahl der Zellen pro cm und die Gleichmässigkeit der Zellstruktur bewertet. Die Messungen wurden wie folgt durchgeführt.

Beurteilung des Abblasens:

Unterschieden wurde zwischen keinem, leichtem und gutem Abblasen. Mit einem guten Abblasen wurde eine gleichmässig über die gesamte Schaumbreite auftretende Öffnung der Kuppenhaut nach Beendigung der Steigreaktion bezeichnet.

Messung der Elastizität:

Zur Anwendung kam der Ball-Rebound-Test nach ASTM D 1564.

Messung der Porosität:

Die angegebenen Werte geben den notwendigen Staudruck in mm Wassersäule an, der notwendig ist, um einen gleichbleibenden Luftstrom von 6 l/Min. durch ein 10 cm dickes Schaumstück mit den Seitenlängen 30 cm ×30 cm aufrechtzuerhalten. Niedrigere Messwerte zeigen demnach eine höhere Offenzelligkeit an.

Messung der Aufdrückkraft:

Zur Durchführung dieser Messung wurde in eine oben offene Box mit den Massen 25 cm × 25 cm × 25 cm geschäumt. Nach einer zweitägigen Lagerung unter normaler Atmosphäre wurde dem Päckchen in einer Höhe von 20 cm

die Kuppe abgeschnitten. Gemessen wurde die Eindruckstauchhärte am unberührten sowie am gut durchgewalkten Schaum. Die Differenz der ermittelten Kräfte ist die zum Aufdrücken der Zellen benötigte Kraft. Zum Messen der Eindruckkräfte wurde ein quadratischer Stempel mit einer Fläche von 100 $cm^2$ verwendet. Die danach bestimmten Aufdrückkräfte sind in Newton (N) angegeben.

Die Werte für Aufdrückkraft, Porosität und Elastizität stehen in einem engen Zusammenhang und stellen ein Mass für die Offenzelligkeit der Schaumstoffe nach der Herstellung dar. Da die beim Aufdrücken verbleibenden Reste von Zellfenstern den Luftdurchgang behindern, zeigen ursprünglich geschlossene Schaumstoffe auch nach dem Aufdrücken schlechtere Porositäts- und Elastizitätswerte.

Verschäumungsbeispiele

Die Überprüfung der erfindungsgemäss zu verwendenden Organopolysiloxane erfolgte in folgenden Formulierungen für hochelastische Polyurethanformschäume.

Formulierung 1:

| | |
|---|---|
| Desmophen® 3900 | 75 Gew.-Teile |
| Desmophen® 3119 | 25 Gew.-Teile |
| Wasser | 3,7 Gew.-Teile |
| Diethanolamin | 0,8 Gew.-Teile |
| Triethylendiamin (33% in Propylenglykol) | 0,4 Gew.-Teile |
| Bis(dimethylaminoethyl)ether (70% in Dipropylenglykol) | 0,12 Gew.-Teile |
| Dibutylzinndilaurat | 0,02 Gew.-Teile |
| Stabilisator | variabel |
| TDI 80/20 | 43 Gew.-Teile |

Desmophen® 3900 ist ein ausschliesslich aus Propylen- und Ethylenoxid aufgebautes Polyol der Firma Bayer mit ungefähr 70% primären OH-Gruppen und einem mittleren Molekulargewicht von 4800.

Desmophen® 3119 ist ein polymere Harnstoffsegmente enthaltendes Polyol der Firma Bayer mit 70 bis 80% primären OH-Gruppen und einem mittleren Molekulargewicht von 6000.

Die Formschäume nach dieser Formulierung haben ein Raumgewicht von ungefähr 34 kg/$m^3$.

Formulierung 2:

| | |
|---|---|
| Voranol® CP 4711 | 60 Gew.-Teile |
| Niax Polyol® 34–28 | 40 Gew.-Teile |
| Wasser | 3,7 Gew.-Teile |
| Diethanolamin | 0,6 Gew.-Teile |
| Triethylendiamin (33% in Propylenglykol) | 0,4 Gew.-Teile |
| Bis(dimethylaminoethyl)ether (70% in Dipropylenglykol) | 0,12 Gew.-Teile |
| Dibutylzinndilaurat | 0,02 Gew.-Teile |
| Stabilisator | variabel |
| TDI 80/20 | 42,3 Gew.-Teile |

Voranol® CP 3711 ist ein ausschliesslich aus Propylen- und Ethylenoxid aufgebautes Polyol der Firma Dow Chemical mit ungefähr 70% primären OH-Gruppen und einem mittleren Molekulargewicht von 4800.

Niax Polyol® 34–28 ist ein polymere Acrylnitril/Styrol-Anteile enthaltendes Polyol der Firma Union Carbide mit überwiegend primären OH-Gruppen und einer OH-Zahl von 28.

Die nach dieser Formulierung entstehenden Formschäume haben ein Raumgewicht von ungefähr 35 kg/$m^3$.

Als Stabilsatoren wurden folgende Gemische eingesetzt:

A) 10 Gew.-% Organopolysiloxan, gelöst in 90 Gew.-% eines Polyethers vom Molekulargewicht 1000 und einem Gewichtsverhältnis Ethylenoxid/Propylenoxid wie 42:58.

B) 10 Gew.-% Organopolysiloxan, gelöst in 85 Gew.-% des gleichen Polyethers wie bei A) und 5 Gew.-% einer Polydimethylsiloxanfraktion der Kettenlänge N = 5 bis 9.

C) 10 Gew.-% Organopolysiloxan, gelöst in 86 Gew.-% des gleichen Polyethers wie bei A) und 4 Gew.-% einer Polydimethylsiloxanfraktion der Kettenlänge N = 8 bis 13.

Als Organopolysiloxane wurden folgende Produkte eingesetzt:

| | |
|---|---|
| I | Organopolysiloxan nach Beispiel 1 |
| II | Organopolysiloxan nach Beispiel 3 |
| III | Organopolysiloxan nach Beispiel 4 |
| IV | Organopolysiloxan nach Beispiel 8 |
| V | Organopolysiloxan nach DE-AS 24 02 690, Beispiel 12 (Vergleichssubstanz) |
| VI | Organopolysiloxan nach DE-AS 24 02 690, Beispiel 5 (Vergleichssubstanz) |
| VII | Polydimethylsiloxan der Kettenlänge N = 5 bis 9 |
| VIII | Polydimethylsiloxan der Kettenlänge N = 8 bis 13. |

In der Schaumformulierung 1 wurden folgende Ergebnisse erhalten:

Stabilisatorgemisch A

| Stabilisator | Gew.-Teile | Aufdrückkraft N | Zellen/cm | Zellstruktur |
|---|---|---|---|---|
| I | 1,8 | 170 | 12 | gleichmässig |
| | 2,4 | 200 | 12 | gleichmässig |
| | 3,6 | 200 | 12 | gleichmässig |
| II | 1,2 | 360 | 10 | noch gestört |
| | 1,8 | 480 | 11 | gleichmässig |
| | 2,4 | 560 | 12 | gleichmässig |
| | 3,6 | 650 | 12 | gleichmässig |
| III | 1,8 | – | – | noch gestört |
| | 2,4 | 180 | 12 | gleichmässig |
| | 3,6 | 240 | 12 | gleichmässig |
| V (Vergleich) | 1,8 | – | – | noch gestört |
| | 2,4 | 260 | 12 | gleichmässig |
| | 3,6 | 400 | 12 | gleichmässig |

Stabilisatorgemisch C

| Stabilisator | Gew.-Teile | Aufdrückkraft N | Zellen/cm | Zellstruktur |
|---|---|---|---|---|
| I | 1,2 | 170 | 12 | gleichmässig |
| | 1,8 | 180 | 12 | gleichmässig |
| | 2,4 | 180 | 12 | gleichmässig |
| | 3,6 | 190 | 13 | gleichmässig |
| II | 0,6 | 200 | 12 | gleichmässig |
| | 0,9 | 220 | 12 | gleichmässig |
| | 1,2 | 240 | 12 | gleichmässig |
| | 2,4 | 290 | 12 | gleichmässig |
| | 3,6 | 400 | 13 | gleichmässig |
| III | 1,2 | 180 | 12 | gleichmässig |
| | 2,4 | 260 | 12 | gleichmässig |
| | 3,6 | 320 | 13 | gleichmässig |
| V (Vergleich) | 1,2 | 260 | 12 | gleichmässig |
| | 1,8 | 280 | 12 | gleichmässig |
| | 2,4 | 320 | 13 | gleichmässig |
| | 3,6 | 380 | 14 | gleichmässig |

In Schaumformulierung 2 wurden folgende Ergebnisse erhalten:

Stabilisatorgemisch A

| Stabilisator | Gew.-Teile | Aufdrückkraft N | Zellen/cm | Zellstruktur |
|---|---|---|---|---|
| I | 1,2 | – | – | noch gestört |
| | 1,8 | 200 | 11 | gleichmässig |
| | 2,4 | 200 | 12 | gleichmässig |
| | 3,6 | 240 | 12 | gleichmässig |
| II | 1,2 | 200 | 11 | gleichmässig |
| | 1,8 | 250 | 11 | gleichmässig |
| | 2,4 | 350 | 11 | gleichmässig |
| | 3,6 | 500 | 12 | gleichmässig |
| III | 0,8 | 210 | 11 | gleichmässig |
| | 1,2 | 230 | 12 | gleichmässig |
| | 2,4 | 260 | 12 | gleichmässig |
| V (Vergleich) | 1,2 | – | – | noch gestört |
| | 2,4 | 240 | – | gleichmässig |
| | 3,6 | 360 | – | gleichmässig |

Stabilisatorgemisch B

| Stabilisator | Gew.-Teile | Aufdrückkraft N | Zellen/cm | Zellstruktur |
|---|---|---|---|---|
| I | 1,2 | 200 | 11 | gleichmässig |
| | 1,8 | 220 | 11 | gleichmässig |
| | 2,4 | 220 | 11 | gleichmässig |
| | 3,6 | 260 | 11 | gleichmässig |
| II | 0,6 | 180 | 10 | gleichmässig |
| | 0,9 | 190 | 11 | gleichmässig |
| | 1,2 | 270 | 11 | gleichmässig |
| | 1,8 | 500 | 12 | gleichmässig |
| V (Vergleich) | 1,2 | 240 | 11 | gleichmässig |
| | 1,8 | 260 | 11 | gleichmässig |
| | 2,4 | 290 | 12 | gleichmässig |
| | 3,6 | 400 | 12 | gleichmässig |
| VI (Vergleich) | 1,8 | – | – | kollabiert |
| | 3,6 | – | – | kollabiert |

Stabilisatorgemisch C

| Stabilisator | Gew.-Teile | Aufdrückkraft N | Zellen/cm | Zellstruktur |
|---|---|---|---|---|
| I | 0,9 | 170 | 11 | gleichmässig |
| | 1,2 | 180 | 11 | gleichmässig |
| | 2,4 | 200 | 12 | gleichmässig |
| | 3,6 | 240 | 12 | gleichmässig |
| II | 0,6 | 200 | 12 | gleichmässig |
| | 1,2 | 200 | 12 | gleichmässig |
| | 2,4 | 270 | 12 | gleichmässig |
| | 3,6 | 310 | 12 | gleichmässig |
| III | 0,6 | 180 | 11 | gleichmässig |
| | 1,2 | 200 | 12 | gleichmässig |
| | 1,8 | 200 | 12 | gleichmässig |
| | 2,4 | 220 | 12 | gleichmässig |
| V (Vergleich) | 1,2 | 280 | 11 | gleichmässig |
| | 1,8 | 300 | 12 | gleichmässig |
| | 2,4 | 350 | 12 | gleichmässig |
| | 3,6 | 400 | 12 | gleichmässig |
| VII (Vergleich) | 1,8 | – | – | kollabiert |
| | 3,6 | – | – | kollabiert |

Die Verschäumungsergebnisse in diesen beiden Formulierungen für hochelastische Polyurethanformschäume machen deutlich, dass die erfindungsgemäss zu verwendenden Stabilisatoren sowohl in reiner Form als auch in Abmischung mit reinen Polydimethylsiloxanen eine höhere Aktivität und, wie in den Werten für die Aufdrückkraft verdeutlicht, auch ein merklich breiteres Verarbeitungsspiel in bezug auf Veränderungen der Stabilisatorkonzentration aufweisen.

Weiterhin wurden die erfindungsgemäss zu verwendenden Organopolysiloxane in folgenden Formulierungen für hochelastische Polyurethanblockschäume untersucht. Dabei wurden folgende Formulierungen angewandt:

Formulierung 3:

| | |
|---|---|
| Desmophen® 3900 | 75 Gew.-Teile |
| Desmophen® 3119 | 25 Gew.-Teile |
| Wasser | 3,5 Gew.-Teile |
| Diethanolamin | 0,9 Gew.-Teile |
| Triethylendiamin (33% in Propylenglykol) | 0,4 Gew.-Teile |
| Dimethylethanolamin | 0,3 Gew.-Teile |
| Trichlorethylphosphat | 2,0 Gew.-Teile |
| TDI 80/20 | 41,3 Gew.-Teile |

Formulierung 4:

| | |
|---|---|
| Niax Polyol® CM 11 (Produkt der BP Chemical) | 100 Gew.-Teile |
| Wasser | 3,2 Gew.-Teile |
| Diethanolamin | 0,7 Gew.-Teile |
| Bis(dimethylaminoethyl)ether (70% in Dipropylenglykol) | 0,1 Gew.-Teile |
| Dibutylzinndilaurat | 0,24 Gew.-Teile |
| TDI 80/20 | 37,0 Gew.-Teile |

Die Schäume, die nach Formulierung 3 entstanden sind, haben Raumgewichte zwischen 26 und 28 kg/m$^3$; mit der Formulierung 4 ergaben sich Raumgewichte im Bereich von 28 bis 30 kg/cm$^3$.

Die Überprüfung der erfindungsgemäss zu verwendenden Organopolysiloxane in diesen Formulierungen erfolgte unter Anwendung des Stabilisatorgemisches C.

Formulierung 3:

| Stabilisator | Gew.-Teile | Aufdrückkraft N | Porosität | Elastizität | Zellen pro cm | Abblasen |
|---|---|---|---|---|---|---|
| III | 0,8 | 60 | 20 | 63 | 9 | leicht |
| | 1,0 | 68 | 24 | 65 | 9 | gut |
| | 1,5 | 79 | 30 | 65 | 10 | gut |
| IV | 0,8 | 54 | 12 | 64 | 9 | gut |
| | 1,0 | 50 | 12 | 66 | 9 | gut |
| | 1,5 | 60 | 14 | 66 | 10 | gut |
| VI | 0,8 | 65 | 27 | 64 | 9 | leicht |
| (Vergleich) | 1,2 | 74 | 30 | 62 | 9 | leicht |
| | 1,5 | 90 | 44 | 60 | 9 | leicht |
| VIII | 0,8 | – | – | – | – | kollabiert |
| (Vergleich) | 1,5 | – | – | – | – | kollabiert |

Die Ergebnisse zeigen, dass die erfindungsgemässen Organopolysiloxane im vergleichbaren Konzentrationsbereich bei niedrigeren Aufdrückkräften offenzelligere Schäume von höherer Elastizität als mit Stabilisatoren des Standes der Technik ergeben.

Formulierung 4:

| Stabilisator | Gew.-Teile | Aufdrückkraft N | Porosität | Elastizität | Zellen pro cm | Abblasen |
|---|---|---|---|---|---|---|
| III | 1,0 | 130 | 30 | 55 | 10 | gut |
| | 1,5 | 150 | 48 | 56 | 11 | gut |
| | 2,0 | 200 | 70 | 54 | 11 | leicht |
| IV | 1,0 | 120 | 24 | 56 | 10 | gut |
| | 1,5 | 140 | 31 | 56 | 11 | gut |
| | 2,0 | 190 | 48 | 55 | 11 | gut |
| VI | 1,0 | 130 | 34 | 55 | 10 | leicht |
| (Vergleich) | 1,5 | 180 | 59 | 52 | 11 | leicht |
| | 2,0 | 440 | 140 | 50 | 12 | kein Abblasen |

Die erfindungsgemässen Organopolysiloxane ergeben gegenüber Produkten des Standes der Technik deutlich geringere Aufdrückkräfte und bessere Porosiäten. Ausserdem führen sie zu einem besseren Abblasen nach dem Aufsteigen, was ein zusätzliches Mass für die Vollständigkeit der Zellöffnung darstellt.

**Patentansprüche**

1. Verfahren zur Herstellung hochelastischer kalthärtender Polyurethanschaumstoffe aus mindestens difunktionellen Polyisocyanaten, Polyolen mit mindestens zwei Hydroxylgruppen je Molekül, wovon im Mittel mindestens 40% hiervon primäre Hydroxylgruppen sind und das Äquivalentgewicht je Hydroxylgruppe 700 bis 3000 beträgt, Katalysatoren, Treibmitteln und Stabilisatoren sowie gegebenenfalls üblichen Zusatzmitteln, dadurch gekennzeichnet, dass man als Stabilisatoren Organopolysiloxane mit im Mittel mindestens einer end- oder seitenständig gebundenen Gruppe Z der Formel

$$-(CH_2)_3-O-CH_2-\underset{\underset{\displaystyle OH}{|}}{C}H-CH_2X$$

oder

$$-(CH_2)_3-O-CH_2-\underset{\underset{\displaystyle X}{|}}{C}H-CH_2OH$$

wobei X ein $-OR^1-$, $-NR^2_2-$, $-SR^1-$, Halogen- oder Pseudohalogenrest,

$R^1$ ein Alkylrest mit 1 bis 4 Kohlenstoffatomen, ein Wasserstoffrest oder ein Arylrest,

$R^2$ ein Alkylrest mit 1 bis 4 Kohlenstoffatomen ist,

und wobei die Hydroxylgruppe in der Gruppe Z überwiegend sekundär gebunden ist, verwendet.

2. Verfahren nach Anspruch 1, dadurch gekennzeichnet, dass man Organopolysiloxane der allgemeinen Formel

$$Y(CH_3)_2SiO[Si(CH_3)_2O]_a[SiCH_3YO]_bSi(CH_3)_2Y$$

wobei Y ein Methylrest oder die Gruppe Z ist, aber mindestens ein Rest Y die Bedeutung von Z hat und $a = 1$ bis 25, $b = 0$ bis 10 ist, verwendet.

3. Verfahren nach Anspruch 1 oder 2, dadurch gekennzeichnet, dass man Organopolysiloxane verwendet, in denen X einen Rest aus der Gruppe $-OCH_3$, $-OC_2H_5$, $-OC_6H_5$, $-OH$, $-N(CH_3)_2$, $-N(C_2H_5)_2$, $-Cl$ und $-CN$ darstellt.

4. Verfahren nach einem der Ansprüche 1 bis 3, dadurch gekennzeichnet, dass die Organopolysiloxane in Kombination mit niedrigmolekularen Polydialkyl- oder Polyalkylarylsiloxanen eingesetzt werden.

**Revendications**

1. Procédé pour la préparation de mousses de polyuréthanne à haute élasticité et durcissables à froid, à partir de polyisocyanates au moins bifonctionnels, de polyols ayant au moins deux groupes hydroxyle par molécule, dont en moyenne au moins 40% sont des groupes hydroxyle primaires et dont le masse équivalente par groupe hydroxyle est de 700 à 3000, de catalyseurs, agents porogènes et stabilisants, et éventuellement des additifs courants, caractérisé en ce qu'on utilise en tant que stabilisants des polyorganosiloxanes ayant en moyenne au moins un groupe Z fixé en position terminale ou latérale de formules

$$-(CH_2)_3-O-CH_2-\underset{\underset{\displaystyle OH}{|}}{C}H-CH_2X$$

ou

$$-(CH_2)_3-O-CH_2-\underset{\underset{\displaystyle X}{|}}{C}H-CH_2OH$$

dans lesquelles X est un radical $-OR^1$, $-NR^2_2$, $-SR^1$, un halogène ou un pseudo-halogène,

$R^1$ est un radical alkyle ayant 1 à 4 atomes de carbone, l'hydrogène ou un radical aryle,

$R^2$ est un radical alkyle ayant 1 à 4 atomes de carbone, et où le groupe hydroxyle, dans le groupe Z, est fixé en majorité d'une manière secondaire.

2. Procédé selon la revendication 1, caractérisé en ce qu'on utilise des polyorganosiloxanes de formule générale

$$Y(CH_3)_2SiO\ [Si(CH_3)_2O]_a\ [SiCH_3YO]_b\ Si(CH_3)_2Y$$

dans laquelle Y est un radical méthyle ou le groupe Z, mais où au moins un radical Y a la signification de Z et $a = 1$ à 25, $b =$ à 10.

3. Procédé selon la revendication 1 ou 2, caractérisé en ce qu'on utilise des polyorganosiloxanes dans lesquels X est un radical du groupe $-OCH_3$, $-OC_2H_5$, $-OC_6H_5$, $-OH$, $-N(CH_3)_2$, $-N(C_2H_5)_2$, $-Cl$ et $-N$.

4. Procédé selon l'une des revendications 1 à 3, caractérisé en ce que les polyorganosiloxanes sont utilisés en combinaison avec des polydialkyl- ou polyalkylarylsiloxanes à faible masse moléculaire.

**Claims**

1. Process for the preparation of highly elastic cold-curing polyurethane foams from at least difunctional polyisocyanates, polyols with at least two hydroxyl groups per molecule, of which on average at least 40% thereof are primary hydroxyl groups and the equivalent weight per hydroxyl group is 700 to 3000, catalysts, blowing agents and stabilisers as well as, if appropriate, conventional additives, characterised in that the stabilisers used are organopolysiloxanes with on average at least one terminally-bonded or laterally-bonded group Z of the formula

$$-(CH_2)_3-O-CH_2-\underset{\underset{\displaystyle OH}{|}}{C}H-CH_2X$$

or

$$-(CH_2)_3-O-CH_2-\underset{\underset{\displaystyle X}{|}}{C}H-CH_2OH$$

in which X is an $-OR^1-$, $-NR^2_2-$, $-SR^1-$, halogen or pseudohalogen radial,

$R^1$ is an alkyl radical having 1 to 4 carbon atoms, a hydrogen radical or an aryl radical and

$R^2$ is an alkyl radical having 1 to 4 carbon atoms, the hydroxyl group bonding in the group Z being predominatly secondary.

2. Process according to Claim 1, characterised in that organopolysiloxanes of the general formula

$$Y(CH_3)_2SiO\ [Si(CH_3)_2O]_a\ [SiCH_3YO]_b\ Si(CH_3)_2Y$$

in which Y is a methyl radical or the group Z, with the proviso that at least one radical Y has the meaning of Z, with $a = 1$ to 25 and $b = 0$ to 10, are used.

3. Process according to Claim 1 or 2, characterised in that organopolysiloxanes are used in which X represents a radical from the group comprising $-OCH_3$, $-OC_2H_5$, $-OC_6H_5$, $-OH$, $-N(CH_3)_2$, $-N(C_2H_5)_2$, $-Cl$ and $-CN$.

4. Process according to one of Claim 1 to 3, characterised in that the organopolysiloxanes are employed in combination with low-molecular polydialkyl- or polyalkylarylsiloxanes.